# EUROPEAN PATENT SPECIFICATION

(11) **EP 2 797 487 B1**
(45) Date of publication and mention of the grant of the patent: **04.01.2017**
(21) Application number: 14733493.2
(22) Date of filing: 05.06.2014
(51) Int. Cl.: H01Q 1/12

(54) **ANTENNA ASSEMBLY MOUNTING SYSTEM**
MONTAGESYSTEM FÜR EINE ANTENNENANORDNUNG
SYSTÈME DE MONTAGE D'UN ENSEMBLE ANTENNE

(30) Priority: 06.06.2013 GB 201310116
(43) Date of publication of application: 05.11.2014
(73) Proprietor: Global InvaCom Ltd, Stevenage Hertfordshire SG1 2UG (GB)
(72) Inventor: LLOYD, Raymond, Stevenage, Hertfordshire SG1 2UG (GB)
(74) Representative: Wood, Graham
(86) International application number: PCT/GB2014/051736
(87) International publication number: WO 2014/132091

(56) References cited:
- WO-A1-98/27608
- US-A1- 2003 124 883
- "KEINE PROBLEME BEI WIND UND WETTER. \LANGZEITSCHUTZ BEI SATELLITEN-ANTENNEN", FUNKSCHAU, WEKA FACHZEITSCHRIFTEN VERLAG, POING, DE, vol. 65, no. 7, 19 March 1993 (1993-03-19) , pages 46-49, XP000349697, ISSN: 0016-2841

## Description

The invention to which this application relates is a mounting system for use particularly, although not necessarily exclusively, in the mounting of an antenna to a support surface such as a substantially vertical wall surface.

The provision of an antenna to receive broadcast data signals, such as those received by satellite transmission systems, is well known and, typically, at each premises where a subscription has been taken out to receive the satellite signals, an antenna needs to be mounted to an external wall surface; the antenna being required to be directed towards the location from which the signals can be received, such as one or more satellites. Conventionally, the antenna assembly comprises an antenna dish that is mounted on a bracket and an arm is provided on which a low noise block (LNB) is also mounted. The dish and arm are in turn located on a pole that is located on a plate fastened to the wall.

Conventionally, at least some of the antenna, arm, pole and plate are required to be assembled on site. For example, with a mid pole mounted antenna assembly, it is often the case that the pole will be fastened to the wall with a bracket or mount for the antenna assembly formed thereon. The antenna assembly is then required to be carried, and the weight of the same supported, at a distance from the ground, by the operator while they attempt to fasten securing means, such as nuts and bolts between the antenna assembly and the bracket or mount on the pole. The antenna assembly has significant weight, which is required to be carried by the installer as they typically move up a ladder to the required height of the location on the wall. Furthermore, the mounting location is at the rear of the antenna assembly, which means that the whole weight of the antenna assembly is therefore required to be supported by the installer in position, as the same is being fitted to the plate or bracket.

It has been found that in practice, the need to perform this fixing operation can be difficult to achieve and is physically demanding on the installer, especially when one considers that the installation may be undertaken in environmentally unfriendly conditions, such as in wind and rain. This represents a significant risk to the safety of the installer, both due to the weight of the apparatus and also the particular manner in which the apparatus needs to be supported. Moreover, the height at which the installer is above the surface on the ladder, and also the time constraints which may be imposed for the time of installation, can add further pressure to the installer performing the installation. Other forms of apparatus, such as that shown in GB2310542 require additional components or fixtures to be provided to add further support during the installation procedure, but these additional components add expense to the apparatus as a whole and can themselves be difficult to fit. Furthermore they tend to be o use when the weight of the antenna assembly is not as significant such as when, for example, the antenna assembly does not include a forwardly facing arm or LNB mounted to the front of the antenna dish.

The article "Kein Probleme bei Wind und Wetter/ langzeitschutz bei Satelliten-Antennen" published in the Funkschau (vol. 65, nb. 7, pages 46 to 49) on the 19th of March 1993 describes a mounting means for a satellite antenna assembly according to the preamble of claim 1.

It is therefore an aim of the present invention to provide a mounting assembly for use in mounting an article on a surface and, more particularly, to provide a mounting assembly that is particularly useful in the mounting of satellite antenna.

In a first aspect of the invention, there is provided a mounting assembly for a satellite antenna assembly including an antenna dish and an arm on which at least one LNB is mounted at a spaced distance from the dish, said mounting assembly including an elongate member for location on a support surface and said mounting assembly includes a first portion provided to be attached to, or integral with the elongate member, and a second portion attachable to or integral with said satellite antenna assembly, and wherein said second portion is moved towards the first portion in a first direction to move at least one part of the first or second portion through an aperture in the other of the first or second portion and subsequent movement of the second portion in a second direction which is substantially parallel with the longitudinal axis of the elongate member brings the first and second portions to a first engagement condition in which the weight of the antenna assembly is borne by the mounting assembly.

In one embodiment, said elongate member is a pole with a circular cross section. Typically, the pole is mounted on a support surface such as a wall and the first portion is attached to the pole.

In one embodiment the at least one part is provided on the second portion and the aperture is provided on the first portion. In one embodiment at least two parts are provided in a spaced apart configuration on the second portion and preferably are located such that they respectively contact with opposing side walls of the aperture.

In one embodiment the aperture includes two slotted regions, said slotted regions spaced apart with a spacing which matches that of the said at least two parts which are received in the slotted regions when in the first engagement condition.

In one embodiment each of the parts includes a recess portion which, when the second portion is moved in the second direction locate with the lower edge of the aperture, and most typically with the lower edge of the slotted regions.

The engagement of the first and second portions in the first engagement condition by slidably moving the first portion into engagement with the second portion, avoids the need for the use of rotatable engagement means such as nuts and bolts at this stage. This therefore greatly reduces the installation time and, importantly, reduces the time for which the weight of the antenna needs to be supported by the operator during installation.

In one embodiment the first portion is attached to the elongate member or provided integrally therewith prior to attaching the elongate member to a support surface such as a wall.

In accordance with the invention the installer can carry the antenna assembly and attach it to the first portion of the mounting assembly in a first engagement condition and at which stage the installer is free to take their hands off the antenna assembly, as its weight is supported by the mounting assembly.

In one embodiment, the first and second portions can be further secured together into a second engagement condition using engagement means once the first and second portions are in the first engagement condition.

In one embodiment, the antenna assembly is attached to, or provided integrally with the second portion prior to engagement of the first and second portions together.

In one embodiment, lateral movement in a horizontal plane between the first and second portions is limited once the same are in the first engagement condition.

The engagement means ensure that the second portion is mounted in an accurate position with the first portion when engaged thereto.

In one embodiment, said engagement means are provided as clamp means. Typically, said clamp means comprise a substantially V- or U-shaped member with threaded free ends and a corresponding pair of nuts, for attachment to said free ends.

In one embodiment a first of the V or U shaped engagement means is used to locate and fix the first portion onto the elongate member, prior to movement of the second portion into contact therewith and then a further of the V or U shaped engagement means is provided to pass through the first and second portions of the mounting assembly and the free ends thereof are used to receive nuts which act to hold the mounting assembly in the second engagement condition.

Thus first engagement means are used to engage the first portion to the elongate member and second engagement means engage the second portion to the first portion once the second portion has been moved to the first engagement condition. This therefore avoids the need for additional locating and fixing means to be provided which is contrary to the requirements of the prior art apparatus.

In one embodiment, said V or U shaped member is placed around the elongate member and the free ends of the clamp means pass through apertures in the first portion and is secured thereto by nuts and the free ends then pass through apertures in the second portion of the mounting assembly.

In one embodiment, nuts are attached to the threaded ends of the second engagement means to secure the first and second portions together in the second engagement condition. Thus, the portions are then securely attached to the pole with the nuts tightened to create a substantial friction-fit in the second engagement condition.

In a further aspect of the invention, there is provided a method of mounting a satellite antenna assembly including an antenna dish and an arm on which at least one LNB is mounted at a spaced distance from the dish, to a support surface, said method including providing a mounting assembly, said mounting assembly including a first portion, mounting said portion on, or providing the same with, an elongate member, locating said elongate member with the support surface, said mounting assembly including a second portion, mounting said second portion or providing the same with the satellite antenna assembly, wherein moving said second portion in a first direction to move at least one part of the first or second portion through an aperture in the other of the first or second portion and then moving the second portion in a second direction substantially parallel with the longitudinal axis of the elongate member moves the mounting assembly portions to a first engagement condition in which the weight of the satellite antenna assembly is borne by the mounting assembly, elongate member and support surface.

In one embodiment said movement is to move the said second mounting portion, with the antenna attached thereto into position with the first portion in a sliding action. Typically the second movement direction is downwardly so as to hook and locate the second mounting portion with the first mounting portion.

In one embodiment once the said first engagement condition has been achieved, engagement means are installed that allow said first and second mounting portions to be brought to a second engagement condition and at which condition the mounting is complete.

In one embodiment the first direction of movement is substantially perpendicular to the longitudinal axis of the elongate member.

Specific embodiments of the invention are now described with reference to the accompanying drawings, wherein:
Figures 1a-b illustrate an embodiment of the present invention being mounted on a support means and subsequently mounted on the support means.
Figures 2a-b illustrate a first mounting portion according to an embodiment of the present invention and associated parts, individually and subsequently mounted to a support means.
Figure 3 illustrates a second mounting portion according to an embodiment of the present invention; and
Figure 4 illustrates the satellite antenna assembly mounted using the mounting assembly of the invention

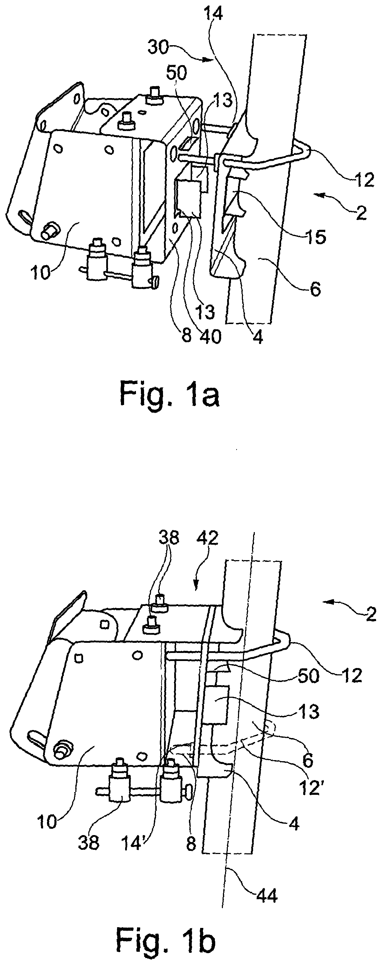

Referring firstly to Figures 1a-b, there is provided a mounting assembly (2) for mounting an antenna assembly to a support surface in the form of a wall of a building and/or the like. The mounting assembly (2) includes a first mounting portion (4) provided to be attached to, or provided integrally with, a elongate member support means in the form of a pole (6). The pole (6) can already be attached to a wall of a building, or be subsequently attached after the first mounting portion (4) is fixed thereto. The mounting assembly includes a second portion (8) which is attached to, or provided integrally with, a satellite antenna assembly, which is to be supported in position by the mounting assembly (2). Further housing (10) is provided which can be conventional in form for the antenna assembly in order that the antenna is retained securely in place and can be positionally adjustable when attached to the support surface. The mounting assembly further includes, in this particular embodiment, first and second engagement means in the form of V- or U-shaped members (12, 12'), and associated nuts (14, 14').

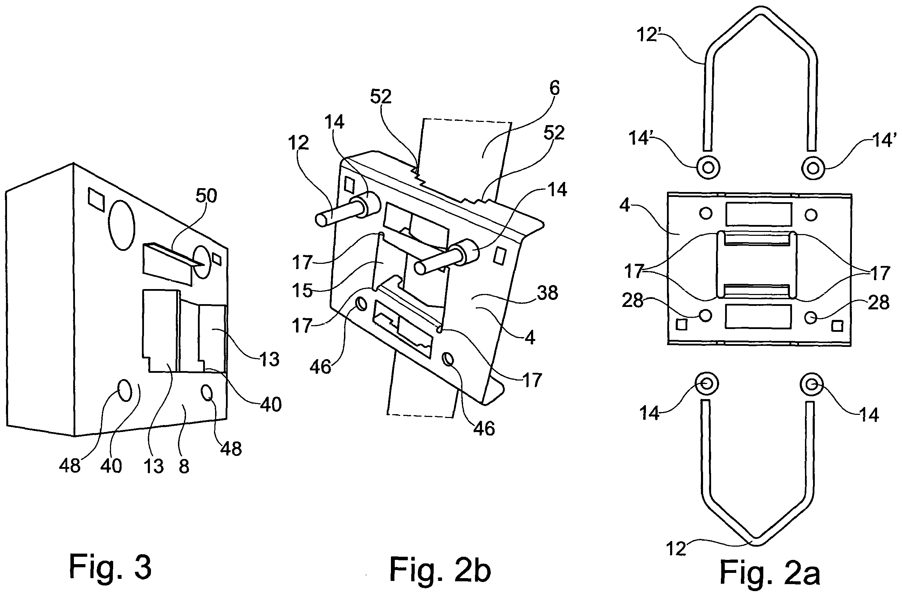

This is shown more clearly in Figures 2a-b, wherein the clamping means (12) are used to mount the first mounting assembly portion (4) to the pole (6) and be secured in position by means of nuts 14. Typically, although not shown the nuts 14 are recessed such that the surface 38 of the portion 4 is substantially flat.

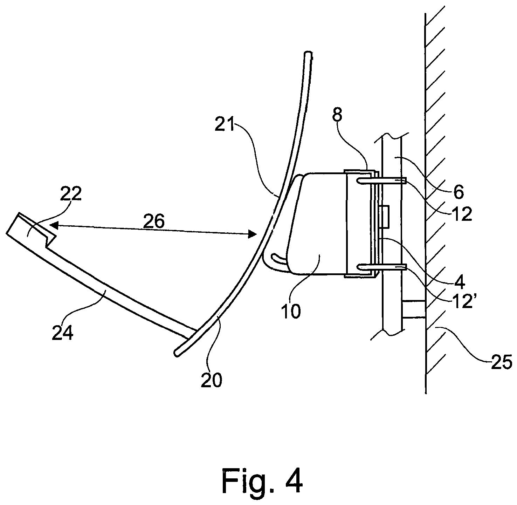

The satellite antenna assembly 21 to be held in position by the mounting assembly (2) typically includes an antenna dish 20, a low noise block (LNB)22, and an arm 24 which serves to locate the LNB 22 at the required distance 26 from the front of the dish 20, as shown in Figure 4 where the assembly is shown as being mounted in position on the pole using the mounting assembly of the invention.

The mounting assembly (2) provides a novel and effective means for mounting a satellite antenna assembly to a wall 25 of a building and one which allows the antenna assembly to be installed with a significantly reduced requirement for the installer to support the weight of the antenna assembly during installation.

In the installation of the antenna assembly, according to one embodiment, the installer attaches the first portion 4 of the mounting assembly to the pole 6 at the required location thereon. The first portion (4) is retained in that position by placing the clamp means 12 through the apertures 28 in the first portion shown in Figure 2a and then engaging the nuts 14 in position as shown in Figure 2b. With this having been performed, the pole 6 is attached at the required height to a support surface such as a wall prior to attachment of the antenna assembly (2). It should be appreciated that in another embodiment the pole 6 may be attached to the support surface and then the first mounting assembly portion 4 is attached to the pole 6 at the required height and using the same engagement means 12 as described. This can relatively easily be achieved as the first mounting assembly portion 4 has no significant weight to be supported during installation.

Once the pole (6) is attached to the wall the installer can carry the antenna assembly, with the second mounting portion 8 already provided therewith, to the height of the first portion (4) on the pole 6 and as shown at Figure 1a. The installer can then move the antenna assembly 21 and the second portion 8 of the mounting bracket in the direction 30 indicated in Figure 1a so as to move the second portion 8 such that the parts 13 in the form of spaced apart plates, move into and through the aperture 15 in the first mounting portion. In this embodiment, slotted regions 17 are provided as part of the aperture to thereby locate the parts 13 of the second mounting portion therewith and retain the same in the position at the respective opposing side edges of the aperture. The parts 13 are each provided with recesses 40 as illustrated in Figure 3 and as also shown in Figure 1a. Once the second portion has been moved in the direction 30 to a point at which the first and second portions 4,8 are in contact or at least adjacent thereto, the second portion 8 and hence antenna assembly 21 mounted thereon are moved in the direction of arrow 42 which is substantially parallel with the longitudinal axis 44 of the pole 6. This movement causes the recess portions 40 of the parts 13 to receive the respective bottom edges of the slotted regions 17 of the aperture 15 therein and act as hook members to thereby lock the first and second portions 4,8 of the mounting assembly together in the first engagement condition. This therefore allows the weight of the antenna assembly 21 to be supported by the first mounting portion and the pole 6 and so the installer is then free to take his hands off the antenna assembly to further engage the same in position and also to perform adjustment of the azimuth and or elevation of the dish 20. Typically the first portion 4 has engagement formations 52, of the type shown in Figure 2b, to aid in the engagement of the first portion 4 with the pole 6. In one embodiment the second portion includes a further part in the form of lip 50 as shown in Figure 3 which also passes into the aperture 15 in the first portion as shown in Figure 1b and engages the top edge of the aperture to further aid the formation of the first and second portions of the mounting assembly in the first engagement condition.

To form the second engagement condition, once the second mounting portion (8), which is shown in more detail in Figure 3, is attached to the first mounting portion (4) as described above, the V or U shaped clamp 12' can be positioned as shown in broken lines in Figure 1b with the free ends of the same passing through the apertures 46 in the first portion and apertures 48 in the second portion 8. The free ends then receive the nuts (14') thereon which serve to secure the clamp 12' and hence the first portion 4, pole 6 and second portion 8 in position.

The movement in direction 42 between the first (4) and second (8) mounting portions, to provide the first engagement condition, as shown in the figures, is provided in a substantially vertical plane. Typically, substantially all lateral movement in a horizontal plane between the first (4) and second (8) mounting plates is limited by the engagement of the V or U shaped member (12) and nuts (14), and is eliminated when the second engagement means 12', 14'; are located for the second engagement condition to be achieved.

This then allows the subsequent azimuth and elevation adjustment of the antenna dish 20 with respect to the mounting assembly to be achieved using conventional adjustment means 38.

The present invention therefore provides an efficient way in which to allow for the installation of a satellite antenna assembly at a raised position and to allow the weight of the assembly to be supported by the mounting assembly in a first engagement condition and thereby allow a second engagement condition to be achieved.

## Claims

1. A mounting assembly (2) for a satellite antenna assembly (21), said mounting assembly (2) including an elongate member (6) for location on a support surface and said mounting assembly includes a first portion (4) provided to be attached to, or integral with the elongate member (6), and a second portion (8) attachable to or integral with said satellite antenna assembly (21), said first and second portions (4, 8) are provided to be brought together by movement of first and second parts (13) of the second portion through an aperture (15) in the first portion and subsequent movement of the second portion (8) in a second direction which is substantially parallel with the longitudinal axis of the elongate member (6) to bring the first and second portions (4, 8) to a first engagement condition in which the weight of the antenna assembly (21) is borne by the mounting assembly (2) **characterised in that** the said first and second parts are provided in a spaced apart configuration and the aperture includes two spaced apart slotted regions with a spacing which matches that of the said at least two parts (13) which are received in the slotted regions when in the first engagement condition and each of the parts includes a recess portion which, when the second portion is moved in the second direction said movement causes the recess portions (40) of the parts (13) to receive the respective bottom edges of the slotted regions (17) of the aperture (15) therein to thereby lock the first and second portions (4, 8) of the mounting assembly together in the first engagement condition.

2. An assembly according to claim 1 wherein the said two parts (13) are located such that they respectively contact with opposing side walls of the aperture (15).

3. An assembly according to claim 1 wherein the first and second portions (4, 8) are further secured together into a second engagement condition using engagement means (12, 12') once the first and second portions are in the first engagement condition.

4. An assembly according to claim 1 wherein engagement means are provided in the form of a substantially V- or U-shaped member (12, 12') with threaded free ends and a corresponding pair of nuts (14, 14'), for attachment to said free ends.

5. An assembly according to claim 4 wherein a first of the V or U shaped engagement means (12) is used to locate and fix the first portion (4) onto the elongate member (6) and a further of the V or U shaped engagement means (12') is used to pass through the first and second portions (4, 8) of the mounting assembly and the free ends thereof are used to receive nuts (14, 14') which act to hold the mounting assembly in the second engagement condition.

6. A method of mounting a satellite antenna (21) assembly to a support surface, said method including providing a mounting assembly (2), said mounting assembly (2) including a first portion (4), mounting said portion (4) on, or providing the same with, an elongate member (6), locating said elongate member (6) with the support surface, said mounting assembly (2) including a second portion (8), mounting said second portion (8) or providing the same with the satellite antenna assembly (21), moving said second portion (8) in a first direction to move first and second parts (13) of the second portion through an aperture (15) in the first portion and then moving the second portion (8) in a second direction substantially parallel with the longitudinal axis of the elongate member (6) moves the mounting assembly portions to a first engagement condition in which the weight of the satellite antenna assembly (21) is borne by the mounting assembly (2), elongate member (6) and support surface, and **characterized in that** the said first and second parts are provided in a spaced apart configuration and the aperture includes two spaced apart slotted regions with a spacing which matches that of the said at least two parts (13) which are received in the slotted regions when moving the assembly portions to the first engagement condition and each of the parts includes a recess portion which, when the second portion is moved in the second direction said movement causes the recess portions (40) of the parts (13) to receive the respective bottom edges of the slotted regions (17) of the aperture (15) therein to thereby lock the first and second portions (4, 8) of the mounting assembly together in the first engagement condition.

7. A method according to claim 6 wherein said movement is to move the said second mounting portion (8), with the antenna attached thereto into position with the first portion (4) in a sliding action.

8. A method according to claim 6 wherein the second movement direction is downwardly so as to hook and locate the second mounting portion (8) with the first mounting portion (4).

9. A method according to claim 6 wherein once the said first engagement condition has been achieved, engagement means (12, 12') are installed that allow said first and second mounting portions (4, 8) to be brought to a second engagement condition.

## Patentansprüche

1. Montagebaugruppe (2) für eine Satellitenantennenbaugruppe (21), wobei die genannte Montagebaugruppe (2) ein längliches Element (6) zum Positionieren auf einer Trägerfläche aufweist und die genannte Montagebaugruppe einen ersten Abschnitt (4), der an dem länglichen Element (6) angebracht oder einstückig damit ist, und einen zweiten Abschnitt (8) aufweist, der an der genannten Satellitenantennenbaugruppe (21) angebracht werden kann oder einstückig damit ist, wobei der genannte erste und zweite Abschnitt (4, 8) zum Zusammenbringen durch eine Bewegung des ersten und zweiten Teils (13) des zweiten Abschnitts durch ein Loch (15) im ersten Abschnitt und eine Folgebewegung des zweiten Abschnitts (8) in einer zweiten Richtung im Wesentlichen parallel zur Längsachse des länglichen Elements (6) vorgesehen sind, um den ersten und zweiten Abschnitt (4, 8) in einen ersten Eingriffszustand zu bringen, in dem das Gewicht der Antennenbaugruppe (21) von der Montagebaugruppe (2) getragen wird, **dadurch gekennzeichnet, dass** der genannte erste und zweite Teil in einer beanstandeten Konfiguration bereitgestellt werden und das Loch zwei beanstandete geschlitzte Regionen mit einem Abstand aufweist, der zu dem der genannten wenigstens zwei Teile (13) passt, die im ersten Eingriffszustand in den geschlitzten Regionen aufgenommen werden, und jedes der Teile einen Aussparungsabschnitt aufweist, wobei, wenn der zweite Abschnitt in der zweiten Richtung bewegt wird, die genannte Bewegung bewirkt, dass die Aussparungsabschnitte (40) der Teile (13) die jeweiligen unteren Ränder der geschlitzten Regionen (17) des Lochs (15) darin aufnehmen, um dadurch den ersten und zweiten Abschnitt (4, 8) der Montagebaugruppe im ersten Eingriffszustand zusammen zu verriegeln.

2. Baugruppe nach Anspruch 1, wobei die genannten beiden Teile (13) so positioniert sind, dass sie jeweils gegenüberliegende Seitenwände des Lochs (15) kontaktieren.

3. Baugruppe nach Anspruch 1, wobei der erste und zweite Abschnitt (4, 8) ferner in einem zweiten Eingriffszustand mit Eingriffsmitteln (12, 12') aneinander befestigt werden, wenn der erste und zweite Abschnitt im ersten Eingriffszustand sind.

4. Baugruppe nach Anspruch 1, wobei Eingriffsmittel in Form eines im wesentlichen V- oder U-förmigen Elements (12, 12') mit freien Enden mit Gewinde und einem entsprechenden Paar Muttern (14,14') zum Anbringen an den genannten freien Enden vorgesehen sind.

5. Baugruppe nach Anspruch 4, wobei ein erstes der V- oder U-förmigen Eingriffsmittel (12) zum Positionieren und Fixieren des ersten Abschnitts (4) an dem länglichen Element (6) benutzt wird und ein weiteres der V- oder U-förmigen Eingriffsmittel (12') zum Leiten durch den ersten und zweiten Abschnitt (4, 8) der Montagebaugruppe benutzt wird und die freien Enden davon zum Aufnehmen von Muttern (14, 14') benutzt werden, die zum Halten der Montagebaugruppe im zweiten Eingriffszustand dienen.

6. Verfahren zum Montieren einer Satellitenantennenbaugruppe (21) an einer Trägerfläche, wobei das genannte Verfahren Folgendes beinhaltet: Bereitstellen einer Montagebaugruppe (2), wobei die genannte Montagebaugruppe (2) einen ersten Abschnitt (4) umfasst, Montieren des genannten Abschnitts (4) an, oder Versehen desselben mit, einem länglichen Element (6), Positionieren des genannten länglichen Elements (6) mit der Trägerfläche, wobei die genannte Montagebaugruppe (2) einen zweiten Abschnitt (8) aufweist, Montieren des genannten zweiten Abschnitts (8) an, oder Versehen desselben mit, der Satellitenantennenbaugruppe (21), wobei durch Bewegen des genannten zweiten Abschnitts (8) in einer ersten Richtung zum Bewegen des genannten ersten und zweiten Teils (13) des zweiten Abschnitts durch ein Loch (15) im ersten Abschnitt und dann Bewegen des zweiten Abschnitts (8) in einer zweiten Richtung im Wesentlichen parallel zur Längsachse des länglichen Elements (6) die Montagebaugruppenabschnitte in einen ersten Eingriffszustand bewegt werden, in dem das Gewicht der Satellitenantennenbaugruppe (21) von der Montagebaugruppe (2), dem länglichen Element (6) und der Trägerfläche getragen wird, und **dadurch gekennzeichnet, dass** der genannte erste und zweite Teil in einer beanstandeten Konfiguration vorgesehen sind und das Loch zwei beanstandete geschlitzte Regionen mit einem Abstand aufweist, der zu dem der genannten wenigstens zwei Teile (13) passt, die bei der Bewegung der Baugruppenabschnitte in den ersten Eingriffszustand in den geschlitzten Regionen aufgenommen werden, und jeder der Teile einen Aussparungsabschnitt aufweist, wobei, wenn der zweite Abschnitt in der ersten Richtung bewegt wird, die genannte Bewegung bewirkt, dass die Aussparungsabschnitte (40) der Teile (13) die jeweiligen unteren Ränder der geschlitzten Regionen (17) des Lochs (15) darin aufnehmen, um dadurch den ersten und zweiten Abschnitt (4, 8) der Montagebaugruppe im ersten Eingriffszustand zusammen zu verriegeln.

7. Verfahren nach Anspruch 6, wobei die genannte Bewegung zum Bewegen des genannten zweiten Montageabschnitts (8) dient, wenn die Antenne daran in einer Position mit dem ersten Abschnitt (4) in einer Gleitwirkung angebracht ist.

8. Verfahren nach Anspruch 6, wobei die zweite Bewegungsrichtung nach unten verläuft, um den zweiten Montageabschnitt (8) am ersten Montageabschnitt (4) einzuhaken und zu positionieren.

9. Verfahren nach Anspruch 6, wobei nach dem Erzielen des genannten ersten Eingriffszustands Eingriffsmittel (12, 12') installiert werden, die es zulassen, den genannten ersten und zweiten Montageabschnitt (4,8) in einen zweiten Eingriffszustand zu bringen.

## Revendications

1. Ensemble de montage (2) pour un ensemble d'antenne satellitaire (21), ledit ensemble de montage (2) incluant un élément allongé (6) en vue d'un placement sur une surface de support, et ledit ensemble de montage incluant une première portion (4) prévue pour être attachée à l'élément allongé (6), ou faisant partie intégrante de ce dernier, et une deuxième portion (8) apte à être attachée audit ensemble d'antenne satellitaire (21), ou faisant partie intégrante de ce dernier, lesdites première et deuxième portions (4, 8) étant prévues pour être mises ensemble en vertu du mouvement des première et deuxième parties (13) de la deuxième portion à travers une ouverture (15) dans la première portion et d'un mouvement ultérieur de la deuxième portion (8) dans une deuxième direction qui est sensiblement parallèle à l'axe longitudinal de l'élément allongé (6) pour amener les première et deuxième portions (4, 8) jusqu'à un premier état de solidarisation dans lequel le poids de l'ensemble d'antenne (21) est soutenu par l'ensemble de montage (2), **caractérisé en ce que** lesdites première et deuxième parties sont prévues suivant une configuration en espacement l'une de l'autre, et l'ouverture inclut deux régions fendues en espacement l'une de l'autre avec un espacement qui est assorti à celui desdites au moins deux parties (13) lesquelles sont reçues dans les régions fendues quand elles se trouvent dans le premier état de solidarisation et chacune des parties inclut une portion en creux qui, lorsque la deuxième portion est déplacée dans la deuxième direction, ledit mouvement oblige les portions en creux (40) des parties (13) à recevoir les bords inférieurs respectifs des régions fendues (17) de l'ouverture (15) dans celles-ci, ce qui par conséquent verrouille les première et deuxième portions (4, 8) de l'ensemble de montage l'une à l'autre dans le premier état de solidarisation.

2. Ensemble selon la revendication 1, lesdites deux parties (13) étant localisées de sorte qu'elles entrent respectivement au contact de parois latérales opposées de l'ouverture (15).

3. Ensemble selon la revendication 1, les première et deuxième portions (4, 8) étant en outre assujetties l'une à l'autre dans un deuxième état de solidarisation grâce à l'utilisation de moyens de solidarisation (12, 12') une fois que les première et deuxième portions se trouvent dans le premier état de solidarisation.

4. Ensemble selon la revendication 1, des moyens de solidarisation étant prévus sous la forme d'un élément sensiblement en forme de V ou d'U (12, 12') avec des extrémités libres filetées et une paire correspondante d'écrous (14, 14'), pour être attachés auxdites extrémités libres.

5. Ensemble selon la revendication 4, un premier des moyens de solidarisation en forme de V ou d'U (12) étant utilisé pour localiser et fixer la première portion (4) sur l'élément allongé (6), et un moyen supplémentaire des moyens de solidarisation en forme de V ou d'U (12') étant utilisé pour passer à travers les première et deuxième portions (4, 8) de l'ensemble de montage et les extrémités libres de celui-ci sont utilisées pour recevoir des écrous (14, 14') lesquels agissent pour maintenir l'ensemble de montage dans le deuxième état de solidarisation.

6. Procédé de montage d'un ensemble d'antenne satellitaire (21) sur une surface de support, ledit procédé incluant les opérations consistant à procurer un ensemble de montage (2), ledit ensemble de montage (2) incluant une première portion (4), monter ladite portion (4) sur un élément allongé (6) ou munir cette portion de ce dernier, localiser ledit élément allongé (6) avec la surface de support, ledit ensemble de montage (2) incluant une deuxième portion (8), monter ladite deuxième portion (8) ou munir celle-ci de l'ensemble d'antenne satellitaire (21), déplacer ladite deuxième portion (8) dans une première direction pour déplacer des première et deuxième parties (13) de la deuxième portion à travers une ouverture (15) ménagée dans la première portion et déplacer ensuite la deuxième portion (8) dans une deuxième direction sensiblement parallèle à l'axe longitudinal de l'élément allongé (6) ce qui déplace les portions de l'ensemble de montage jusqu'à un premier état de solidarisation dans lequel le poids de l'ensemble d'antenne satellitaire (21) est soutenu par l'ensemble de montage (2), l'élément allongé (6) et la surface de support, et **caractérisé en ce que** lesdites première et deuxième parties sont prévues suivant une configuration en espacement l'une de l'autre, et l'ouverture inclut deux régions fendues en espacement l'une de l'autre avec un espacement qui est assorti à celui desdites au moins deux parties (13) lesquelles sont reçues dans les régions fendues lors du déplacement des portions de l'ensemble jusqu'au premier état de solidarisation et chacune des parties inclut une portion en creux qui, lorsque la deuxième portion est déplacée dans la deuxième direction, ledit mouvement oblige les portions en creux (40) des parties (13) à recevoir les bords inférieurs respectifs des régions fendues (17) de l'ouverture (15) dans celles-ci, ce qui par conséquent verrouille les première et deuxième portions (4, 8) de l'ensemble de montage l'une à l'autre dans le premier état de solidarisation.

7. Procédé selon la revendication 6, ledit mouvement étant destiné à déplacer ladite deuxième portion de montage (8), alors que l'antenne est attachée à celle-ci en position avec la première portion (4) suivant une action de coulissement.

8. Procédé selon la revendication 6, la deuxième direction de mouvement étant vers le bas de sorte à accrocher et localiser la deuxième portion de montage (8) avec la première portion de montage (4).

9. Procédé selon la revendication 6, une fois que ledit premier état de solidarisation a été obtenu, des moyens de solidarisation (12, 12') étant installés lesquels permettent auxdites première et deuxième portions de montage (4, 8) d'être amenées jusqu'à un deuxième état de solidarisation.
